# EUROPEAN PATENT APPLICATION

(11) **EP 4 715 313 A1**
(43) Date of publication of application: **25.03.2026**
(21) Application number: 24201524.6
(22) Date of filing: 20.09.2024
(51) Int. Cl.: F28D 20/02, F28F 13/00

(54) **CONTAINER FOR STORING THERMAL ENERGY, METHOD FOR PRODUCING A CONTAINER FOR STORING THERMAL ENERGY, THERMAL ENERGY STORAGE DEVICE, AND SYSTEM**

(71) Applicant: Mitsubishi Electric R&D Centre Europe B.V., Livingston EH54 5DJ (GB); MITSUBISHI ELECTRIC CORPORATION, Chiyoda-ku Tokyo 100-8310 (JP)
(72) Inventor: Olkis, Christopher, Livingston, EH54 5DJ (GB)
(74) Representative: Pfenning, Meinig & Partner mbB

(57) **Abstract**

The invention relates to a container for storing thermal energy, a method for producing a container for storing thermal energy, a thermal energy storage device and a system are provided. The container for storing thermal energy, comprises or consists of at least one wall defining an internal space of the container, a phase change material located in the internal space of the container and a gas located in the internal space of the container, characterized in that the gas in the internal space of the container has a higher thermal conductivity than air and the internal space of the container is sealed from an external space of the container in a gas-tight manner. The container for storing thermal energy according to the invention has an improved heat transfer property and a higher long-term stability.

## Description

A container for storing thermal energy, a method for producing a container for storing thermal energy, a thermal energy storage device and a system are provided. The container for storing thermal energy, comprises or consists of at least one wall defining an internal space of the container, a phase change material located in the internal space of the container and a gas located in the internal space of the container, characterized in that the gas in the internal space of the container has a higher thermal conductivity than air and the internal space of the container is sealed from an external space of the container in a gas-tight manner. The container for storing thermal energy according to the invention has an improved heat transfer property and a higher long-term stability.

Phase change materials (abbreviated as "PCM") have low thermal conductivity compared to other materials, e.g. the thermal conductivity of most common PCM is below 1 W/(m K) and inorganic PCM often have higher thermal conductivity >0.5 W/(m K) than organic PCM <0.5 W/(m K). PCM also show thermal expansion of approximately 10% between their solid and liquid states. In general, solid PCM have a higher density than liquid PCM. Thus, PCM expand when melting as the liquid PCM requires more space. An exception to this is water, where liquid water has a higher density than ice as ice is floating on the surface of liquid water.

Due to thermal expansion of PCM, containers which contain a PCM in the internal space thereof require additional internal space to account for the thermal expansion. Currently, this additional internal space is often filled with air, which is compressed during melting. Air has a very low thermal conductivity of 0.026 W/(m K), which is about one order of magnitude below the thermal conductivity of PCM. It is assumed that air is used because it is already present inside the capsule at the time of manufacturing. However, air is not advantageous because of its very low thermal conductivity. In fact, the air in the internal space of containers of the prior art which contain a PCM has an insulating effect which lowers the thermal performance of the containers.

Mohaghegh, M.R. et al. (Melting of PCM inside a novel encapsulation design for thermal energy storage system, Energy Conversion and Management: X, X 11, 2021, 100098) disclose the transient heat transfer and melting process of the PCM n-octadecane encapsulated in a pear-shaped container and show that the pear-shaped container effectuates a shorter melting time compared to a cyclindrical container. The pear-shaped container has the disadvantage that it contained air within the container and thus thermal conductivity in the region in which air is present is low. Moreover, the container is made of glass and not sealed in a gas-tight manner which results in a low long-term stability of the container.

Starting herefrom, it was the objective of the present application to provide a container for storing thermal energy which overcomes at least one disadvantage of the prior art. Preferably, the container should have an improved heat transfer property (from its PCM in its internals space to a heat transfer fluid in an exterior space and vice versa) and/or should have a higher long-term stability. Moreover, a method for producing such a container, a thermal energy storage device comprising a plurality of said containers and a system comprising two of such thermal energy storage devices should be provided.

The objective is solved by the container having the features of claim 1, the method having the features of claim 10, the thermal energy storage device having the features of claim 12 and the system having the features of claim 15. The dependent claims illustrate advantageous embodiments.

According to the invention, a container for storing thermal energy is provided, comprising or consisting of:
a) at least one wall defining an internal space of the container;
b) a phase change material located in the internal space of the container, and
c) a gas located in the internal space of the container;
characterized in that the gas located in the internal space of the container has a higher thermal conductivity than air and the internal space of the container is sealed from an external space of the container in a gas-tight manner.

The container for storing thermal energy according to the invention has an improved heat transfer property and a higher long-term stability. The improved heat transfer property is achieved by the gas located in the internal space of the container which has a higher thermal conductivity than air. The higher long-term stability is achieved by the gas-tight seal of the internal space of the container against an external space of the container.

In a preferred embodiment, the gas in the internal space of the container comprises or consists of a gas selected from the group consisting of hydrogen, helium, neon, methane combinations thereof. hydrogen has a specific thermal conductivity of 0.18 W/(m K), helium has a specific thermal conductivity of 0.15 W/(m K), neon has a specific thermal conductivity of 0.05 W/(m K) and methane has a specific thermal conductivity of 0.03 W/(m K) whereas air has a specific thermal conductivity of only 0.026 W/(m K). Among said gases helium is most preferrable because its thermal conductivity is more than 5-times higher than that of air and is very similar to that of PCMs. In addition, helium is inert, non-toxic, non-flammable and widely available as industrial gas. Thus, the gas in the internal space of the container preferably comprises of consists of helium.

The gas can be present in the internal space of the container at a gas pressure of 0.1 to 20 bar, preferably 0.5 to 10 bar, more preferably 1 to 6 bar, absolute pressure. The higher the gas pressure, the higher the thermal conductivity of the gas.

Moreover, the gas can be present in the internal space of the container in an amount of 5 to 15 vol.-%, preferably 8 to 12 vol.-%, especially 10 vol.-%, relative to the complete volume of the internal space of the container. The lower the volume of gas in the container, then higher is the overall thermal conductivity of the container. However, the gas volume may not be too low because it must allow for a volume expansion of the PCM during melting of the PCM without mechanically destroying and/or deforming the container.

The at least one wall defining an internal space of the container can comprise or consists of a material selected from the group consisting of polymer, metal, ceramic, glass and combinations thereof. In terms of long-term stability against mechanical forces, it is preferred that the material is selected from the group consisting of polymer, metal, ceramic and combinations thereof. If the at least one wall comprises or consists of a polymer, the container can be provided at lower costs and high long-term stability against corrosion. If the at least one wall comprises or consists of a metal and/or ceramic, the thermal conductivity across the at least one wall of the container is very high. Ceramic has the additional advantage of providing a high long-term stability against corrosion.

Moreover, the at least one wall defining an internal space of the container can have a maximum wall thickness of 9 mm, preferably 8 mm, more preferably 7 mm, even more preferably 6 mm, particular preferably 5 mm, optionally 4 mm, wherein the wall especially has a thickness in the range of 0.04 to 3 mm. The thinner the at least one wall, the higher the thermal conductivity across the at least one wall and the more compact the container can be provided.

In a preferred embodiment, the at least one wall has no opening (in the final state of the container). The advantage is that the gas-tight seal is very long-term stable.

Alternatively, the at least one wall can have an opening which is suitable for being closed in a gas-tight manner (and is closed in a gas-tight manner in the final state of the container). The advantage is that the PCM and/or gas in the internal space of the container can be exchanged in an easy and fast manner, if a need should arise. Thus, the at least one opening can be suitable for filling the internal space of the container with a phase change material and/or with a gas. Besides, the at least one opening can be suitable to apply a vacuum to the internal space of the container. This can be advantageous to exchange the gas in the internal space of the container in an easy and fast manner.

A surface of the at least one wall which is directed to an outside of the container can comprise at least one protrusion, preferably a plurality of protrusions. The advantage is that the surface on the outside of the container is increased and thermal energy can be exchanged more efficiently and quickly between the internal space of the container and an outside space of the container. Thus, the at least one protrusion, optionally the plurality of protrusions, preferably increases a surface area of said surface of the at least one wall. Moreover, the at least one protrusion, optionally the plurality of protrusions, can be configured to extend a flow length of a liquid heat transfer fluid over said surface of the wall. This feature can further improve an exchange of thermal energy between the internal space of the container and an outside space of the container by extending the flow path of heat transfer fluid along said surface of the at least one wall.

The internal space of the container can comprise fins which are configured to improve a heat transfer within the internal space. This has the advantage that a transfer of heat energy into and out of the internal space of the container can occur in a faster manner.

The fins can comprise or consist of metal and/or graphite. These two materials have an excellent heat conductivity.

Moreover, the fins can comprise at least one hole, preferably a plurality of holes. The advantage is that the surface of the fins is increased which results in a more efficient transfer of thermal energy.

Furthermore, the fins can have a porous structure, preferably a mesh structure or foam structure. This also has the advantage that the surface of the fins is increased which results in a more efficient transfer of thermal energy.

Optionally, the fins are attached to the wall of the container or are not attached to the wall of the container. An attachment to the wall of the container improves efficiency of thermal heat transfer and improves long-term stability of the container.

The phase change material located in the internal space of the container can comprise an organic phase change material or consists thereof.

Moreover, the phase change material located in the internal space of the container can comprise an inorganic phase change material or consists thereof.

Besides, the phase change material located in the internal space of the container can have a melting temperature in the range of 25 °C to 200 °C, preferably in the range of 30 °C to 90 °C, more preferably in the range of 35 °C to 80 °C, even more preferably in the range of 40 °C to 70 °C, optionally in the range of 40 °C to 60 °C. PCM melting temperatures are preferably in the range of 40°C to 70°C if a use of the container for domestic hot water heating applications is desired and/or are preferably in the range of 30 to 60°C if a use of the container for space heating applications is desired.

Furthermore, the phase change material located in the internal space of the container can have a melting enthalpy (i.e. heat of fusion) of ≥ 100 kJ/kg, preferably ≥ 150 kJ/kg, more preferably ≥ 200 kJ/kg. The higher the melting enthalpy, the higher is the thermal capacity of the container.

The container can have, at least in regions, a form which is selected from the group consisting of cuboid, prism, pyramid, cone, cylinder, sphere and combinations thereof, wherein the container has preferably, at least in regions, a form of a cuboid or cylinder.

In a preferred embodiment, the container has no pipe in the internal space of the container. The advantage is that the container can be provided at lower costs and in an easier manner compared to a container which comprises a pipe in the internal space thereof.

The container can be configured to allow the phase change material to expand into the gas located in the internal space of the container during a change of phase of the phase change material. Preferably, the phase change material contacts the gas located in the internal space of the container. Alternatively, the phase change material is separated from the gas located in the internal space of the container by a wall which allows an expansion of the phase change material into the gas during a change of phase of the phase change material.

According to the invention, a method for the production of a container for storing thermal energy is provided, the method comprising or consisting of the following steps:
a) providing a container having at least one wall which defines an internal space of the container;
b) providing the internal space of the container with a phase change material;
c) providing the internal space of the container with a gas, optionally by carrying out the method in an atmosphere chamber which has an atmosphere that consists of the gas and by letting the internal space of the container be filled with the gas, or by carrying out the method in ambient air and by purging the internal space of the container with the gas (in gaseous form and/or liquid form) by using a source of the gas;
d) sealing the internal space of the container from an external space of the container;

wherein step b) is carried out before step c) or step c) is carried out before step b),
characterized in that the gas in the internal space of the container has a higher thermal conductivity than air and the internal space of the container is sealed from an external space of the container in a gas-tight manner (in step d)).

In the method, step b) can encompass providing the phase change material in the internal space of the container in a liquid form, wherein, before carrying out step c), the liquid phase change material is preferably allowed to solidify.

Moreover, in the method, before step b), during step b) or before step c), a vacuum can be applied to the internal space of the container.

In a preferred embodiment of the method, a container according to the invention is provided with the method.

According to the invention, a thermal energy storage device is provided, comprising
a) a top wall, a bottom wall and at least one side wall connecting the top wall with the bottom wall, wherein the bottom wall is substantially planar at least in regions;
b) an internal space; and
c) a plurality of containers according to the invention, which are located in the internal space of the thermal energy storage device and are stacked to define a (preferably tortuous) flow path for a heat medium fluid;
wherein each of the plurality of containers has a top wall, a bottom wall and at least one side wall connecting the top wall with the bottom wall.

In a preferred embodiment, the bottom wall and/or the top wall of each container is not arranged in parallel to the substantially planar region of the bottom wall of the thermal energy storage device. Preferably, the bottom wall and/or the top wall of each container is arranged in an angle in the range of 1° to <90°, preferably in the range of 10° to 80°, more preferably in the range of 20 ° to 70°, even more preferably in the range of 30° to 60°, particularly preferably in the range of 40° to 50°, especially 45°, to the substantially planar region of the bottom wall of the thermal energy storage device. This embodiment is particularly preferred if a length of the top wall and bottom wall of at least two of the plurality of containers, preferably of each of the plurality of containers, is larger than a length of their at least one side wall. The reason is that, in this case, the gas present in the internal space of each container will flow upwards against gravity and occupy a smaller surface (and volume) in the internal space of the container compared to a an arrangement of the containers which is parallel to the substantially planar region of the bottom wall of the container. This embodiment thus enhances the transfer of thermal energy from the PCM to a heat medium fluid outside of the containers (i.e. makes it more efficient).

The thermal energy storage device can be a hot water tank and optionally contain water.

According to the invention, a system is provided, comprising
a) a first thermal energy storage device according to the invention;
b) a second thermal energy storage device according to the invention;
c) a heat pump; and
d) a controller.

Preferably, the controller of the system is configured to control the heat pump to charge the first thermal storage device and to control the second thermal storage device to provide domestic hot water and/or space heating. This embodiment has the advantage that a heat pump operation can be decoupled from space heating.

More preferably, the first thermal energy storage device is connected to the second thermal energy storage device in a thermally conductive manner.

With reference to the following figures, the subject-matter of the invention is intended to be explained in more detail without wishing to restrict said subject-matter to the specific embodiments shown here.

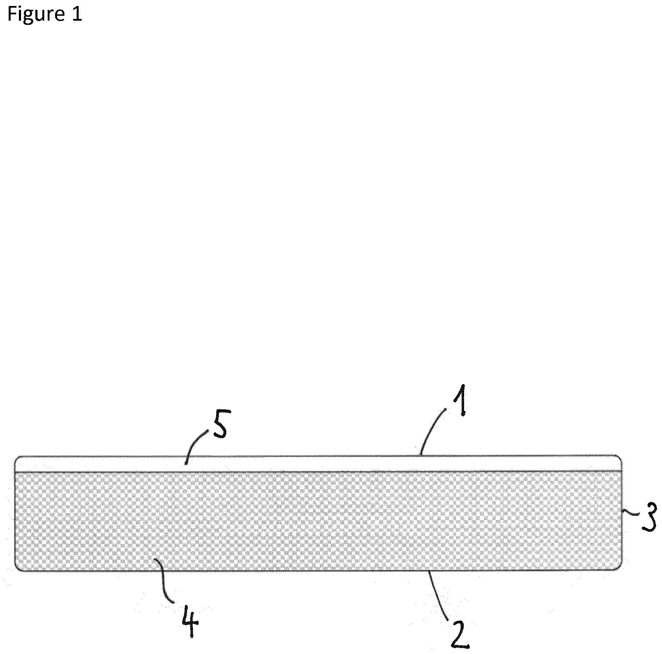

Figure 1 schematically shows a container according to the present invention in a horizontal arrangement. The container comprises at least one wall defining an internal space of the container, specifically a top wall 1, a bottom wall 2 and at least one side wall 3 connecting the top wall 1 with the bottom wall 2. Furthermore, the container comprises a phase change material 4 located in the internal space of the container and a gas 5 located in the internal space of the container. The gas 5 in the internal space of the container has a higher thermal conductivity than air and the internal space of the container is sealed from an external space of the container in a gas-tight manner. In the illustrated horizontal arrangement of then container, the gas forms an expansion gap which is taking up the entire surface area at the top wall 1 of the container. This arrangement can reduce a heat transfer property of the container, especially if the gas is air. However, since the gas 5 in the container according to the invention has a higher thermal conductivity than air, the reduction in heat transfer property is decreased resulting in a significant higher heat transfer property.

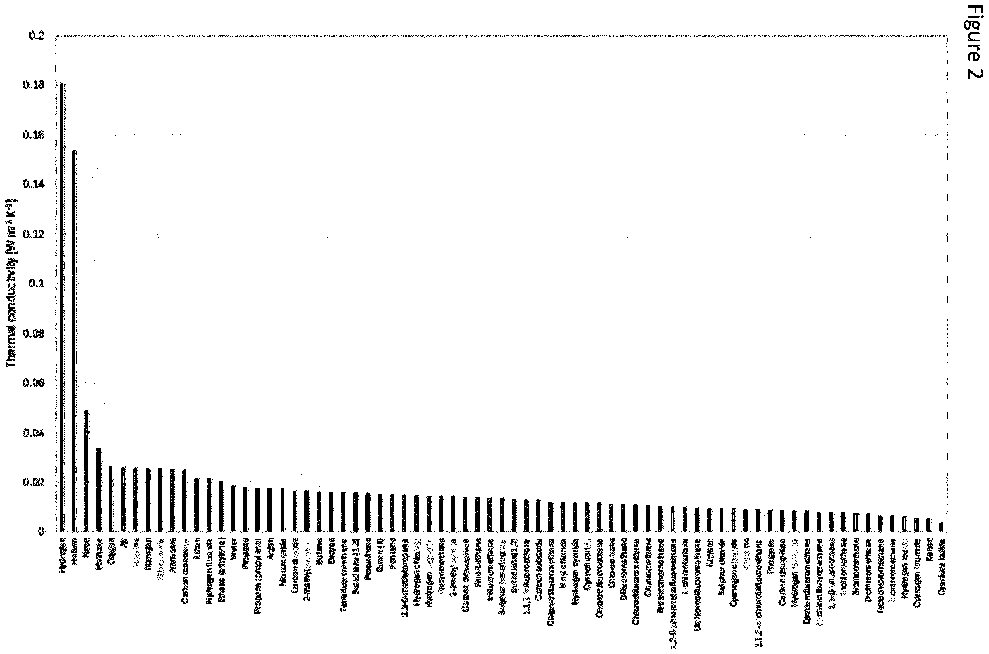

Figure 2 shows thermal conductivities of different common gases at 25 °C. The data was taken from VDI-Wärmeatlas, 10th Edition.

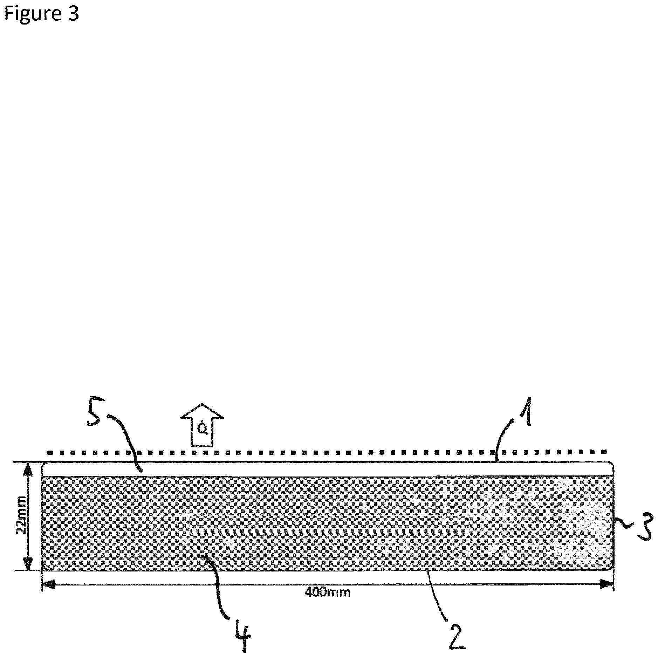

Figure 3 schematically shows a container according to the invention (again in horizontal arrangement) which contains 90 vol.-% phase change material 4 (solid state) and 10 vol.-% of the gas having a higher thermal conductivity than air. The 10 vol.-% of gas 5 allows the phase change material to expand during a change of phase (e.g. melting). The height of the container is 22 mm and the length and width of the container are each 400 mm. The arrow in Figure 3 indicates the direction in which heat energy can be transferred from the internal space of the container to the external space of the container in the direction of the top wall 1 of the container.

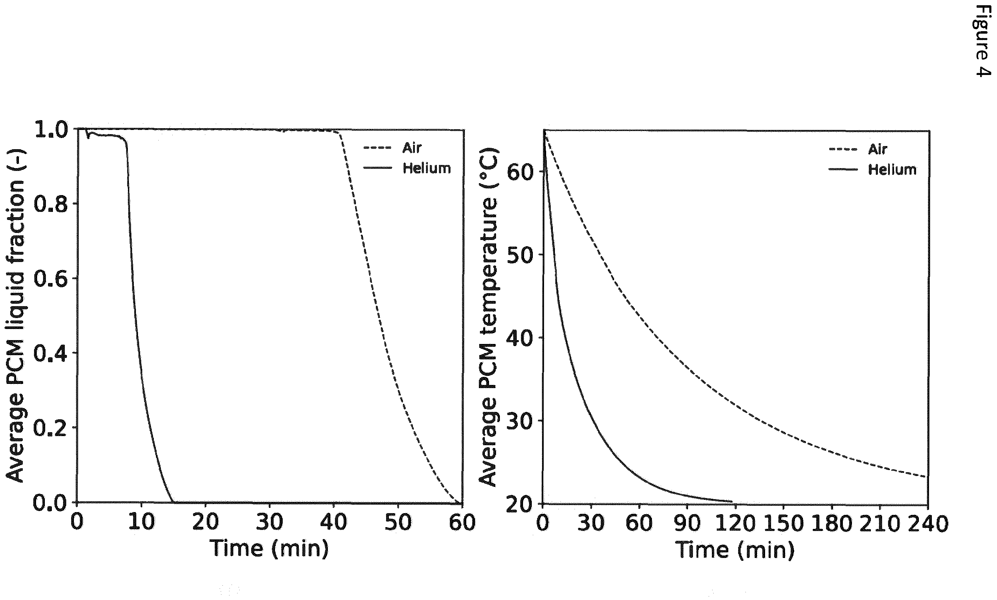

Figure 4 shows results of a simulation with the container shown in Figure 3 in which only the top wall 1 of the container is cooled to 20 °C in the simulation while the rest of the container is initialised to 65 °C, i.e., at the start of the simulation (t = 0 s), initially at uniform 65 °C. The phase change material 4 in the simulation is an inorganic phase change material with a thermal conductivity of 0.6 W/(m K), a density of 1500 kg/m³ in solid state, a thermal expansion of 6%, and a melting temperature of 50°C. The simulation is carried out using computational fluid dynamics in a transient simulation including gravity, energy models, and models for melting and solidification. The first graph shows an average phase change material liquid fraction over time during a solidification of the phase change material and the second graph shows an average phase change material temperature over time during a solidification of the phase change material. In the first case, the gas was air and in the second case, the gas was helium, each at an absolute pressure of 1 bar. The simulation shows that solidification of the phase change material, when the container is cooled from its top wall 1, takes 60 min in the case of air and only 15 min in the case of helium. Hence, the solidification performance can be improved significantly (by 75%). When looking at velocity vectors in the gas phase where the gas was stagnant, the simulation further indicates that heat is mainly transferred through conduction and that convective and radiative heat transfer mechanisms are less significant. Natural convection is caused by a movement of the fluid induced by temperature gradients but the temperature differences during melting and solidification are relatively small, i.e. a maximum of 45 K in this case. In addition, the top surface of the phase change material cools down at a higher rate than the bulk of the phase change material.

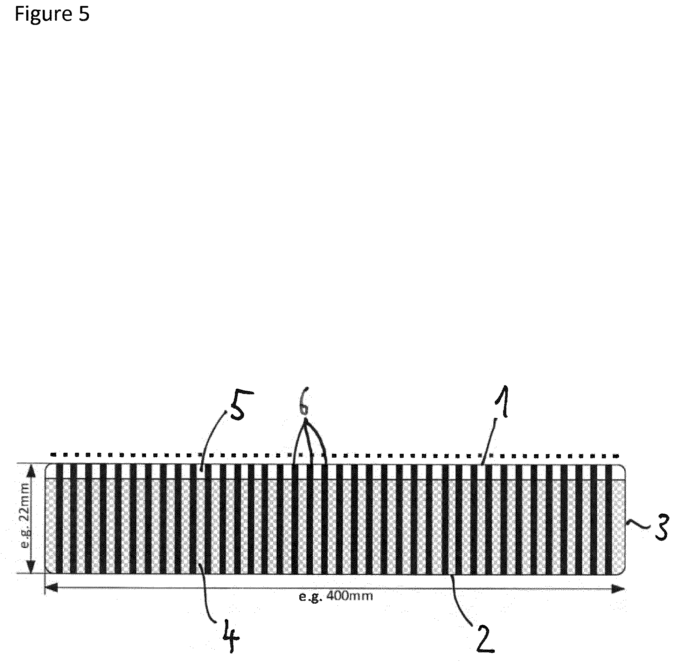

Figure 5 schematically shows a further container according to the invention which is identical to the container of Figure 3 except that its internal space comprises fins 6. The fins further improve heat conduction.

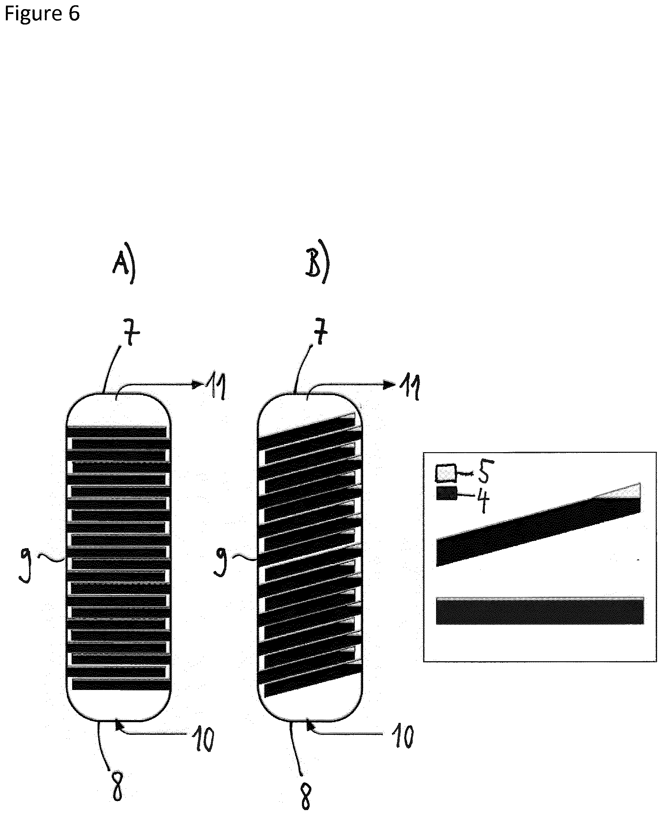

Figure 6 shows two different thermal energy storage devices according to the invention. Each of the two thermal energy storage devices comprises a top wall 7, a bottom wall 8 and at least one side wall 9 connecting the top wall 7 with the bottom wall 8. The bottom wall 8 is substantially planar in a central region. Moreover, each of the two thermal energy storage device comprises a cold water inlet 10, a hot water outlet 11 and an internal space, wherein, in the internal space, a plurality of containers according to the invention are located and stacked to define a tortuous flow path for a heat medium fluid. Each of the plurality of containers has a top wall, a bottom wall and at least one side wall connecting the top wall with the bottom wall In Figure 6A, the bottom wall and the top wall of each container is arranged in parallel to the substantially planar region of the bottom wall 8 of the thermal energy storage device (horizontal arrangement). In said horizontal arrangement, it can be seen that the gas volume spreads over the entire top surface area of each container. This will reduce the heat transfer especially if the gas is air, but the reduction in heat transfer is mitigated if the gas is helium (see Figure 4). In Figure 6B, the bottom wall and the top wall of each container is not arranged in parallel to the substantially planar region of the bottom wall 8 of the thermal energy storage device, but arranged in an angle of 15° to the substantially planar region of the bottom wall 8 of the thermal energy storage device (tilted arrangement). In said tilted arrangement, it can be seen that the gas volume no longer spreads over the entire top surface area of each container, but rather concentrates in the top right corner of each container. This will improve the heat transfer because more of the phase change material is in direct contact with the walls of the container, i.e. the heat transfer surface area of the phase change material is increased.

### List of reference signs

- 1:: top wall of container;
- 2:: bottom wall of container;
- 3:: at least one side wall of the container;
- 4:: a phase change material (located in the internal space of the container);
- 5:: gas (located in the internal space of the container);
- 6:: fins (located in the internal space of the container);
- 7:: top wall of thermal energy storage device;
- 8:: bottom wall of thermal energy storage device;
- 9:: at least one side wall of thermal energy storage device;
- 10:: cold water inlet of thermal energy storage device (e.g. mains inlet);
- 11:: hot water outlet of thermal energy storage device(e.g. domestic hot water outlet).

## Claims

1. A container for storing thermal energy, comprising or consisting of:
a) at least one wall defining an internal space of the container;
b) a phase change material located in the internal space of the container, and
c) a gas located in the internal space of the container;
**characterized in that** the gas in the internal space of the container has a higher thermal conductivity than air and the internal space of the container is sealed from an external space of the container in a gas-tight manner.

2. The container according to the preceding claim, **characterized in that** the gas in the internal space of the container comprises or consists of a gas selected from the group consisting of hydrogen, helium, neon, methane and combinations thereof, wherein the gas preferably comprises of consists of helium.

3. The container according to one of the preceding claims, **characterized in that** the gas is present in the internal space of the container
i) at a gas pressure of 0.1 to 20 bar, preferably 0.5 to 10 bar, more preferably 1 to 6 bar, absolute pressure; and/or
ii) in an amount of 5 to 15 vol.-%, preferably 8 to 12 vol.-%, especially 10 vol.-%, relative to the complete volume of the internal space of the container.

4. The container according to one of the preceding claims, **characterized in that** the at least one wall
i) comprises or consists of a material selected from the group consisting of polymer, metal, ceramic, glass and combinations thereof; and/or
ii) has a maximum wall thickness of 9 mm, preferably 8 mm, more preferably 7 mm, even more preferably 6 mm, particular preferably 5 mm, optionally 4 mm, wherein the wall especially has a thickness in the range of 0.04 to 3 mm.

5. The container according to one of the preceding claims, **characterized in that** the at least one wall has no opening, or has an opening which is suitable for being closed in a gas-tight manner and is suitable for
i) filling the internal space of the container with a phase change material; and/or
ii) filling the internal space of the container with a gas; and/or
iii) applying a vacuum to the internal space of the container.

6. The container according to one of the preceding claims, **characterized in that** a surface of the at least wall which is directed to an outside of the container comprises at least one protrusion, preferably a plurality of protrusions, wherein the at least one protrusion, optionally the plurality of protrusions, is/are configured to
i) increase a surface area of said surface of the wall; and/or
ii) extend a flow length of a liquid heat transfer fluid over said surface of the wall.

7. The container according to one of the preceding claims, **characterized in that** the internal space of the container comprises fins which are configured to improve a heat transfer within the internal space, wherein the fins preferably
i) comprise or consist of metal and/or graphite; and/or
ii) comprise at least one hole, preferably a plurality of holes; and/or
iii) have a porous structure, preferably a mesh structure or foam structure; and/or
iv) are attached to the wall of the container or are not attached to the wall of the container.

8. The container according to one of the preceding claims, **characterized in that** the phase change material
i) comprises an organic phase change material or consists thereof; and/or
ii) comprises an inorganic phase change material or consists thereof; and/or
iii) has a melting temperature in the range of 25 °C to 200 °C, preferably in the range of 30 °C to 90 °C, more preferably in the range of 35 °C to 80 °C, even more preferably in the range of 40 °C to 70 °C, optionally in the range of 40 °C to 60 °C; and/or
iv) has a melting enthalpy of ≥ 100 kJ/kg, preferably ≥ 150 kJ/kg, more preferably ≥ 200 kJ/kg.

9. The container according to one of the preceding claims, **characterized in that** the container
i) has, at least in regions, a form which is selected from the group consisting of cuboid, prism, pyramid, cone, cylinder, sphere and combinations thereof, wherein the container has preferably, at least in regions, a form of a cuboid or cylinder; and/or
ii) has no pipe in the internal space of the container; and/or
iii) is configured to allow the phase change material to expand into the gas located in the internal space of the container during a change of phase of the phase change material.

10. A method for the production of a container for storing thermal energy, the method comprising or consisting of the following steps:
a) providing a container having at least one wall which defines an internal space of the container;
b) providing the internal space of the container with a phase change material;
c) providing the internal space of the container with a gas, optionally by carrying out the method in an atmosphere chamber which has an atmosphere that consists of the gas and by letting the internal space of the container be filled with the gas or by carrying out the method in ambient air and by purging the internal space of the container with the gas by using a source of the gas; and
d) sealing the container;
wherein step b) is carried out before step c) or step c) is carried out before step b),
**characterized in that** the gas in the internal space of the container has a higher thermal conductivity than air and the internal space of the container is sealed from an external space of the container in a gas-tight manner.

11. The method according to claim 10, **characterized in that**
i) step b) encompasses providing the phase change material in the internal space of the container in a liquid form, wherein, before carrying out step c), the liquid phase change material is preferably allowed to solidify; and/or
ii) before step b), during step b) or before step c), a vacuum is applied to the internal space of the container; and/or
iii) a container according to one of the claims 1 to 9 is provided with the method.

12. A thermal energy storage device, comprising
a) a top wall, a bottom wall and at least one side wall connecting the top wall with the bottom wall, wherein the bottom wall is substantially planar at least in regions;
b) an internal space; and
c) a plurality of containers according to one of the claims 1 to 9, which are located in the internal space of the thermal energy storage device and are stacked to define a, preferably tortuous, flow path for a heat medium fluid;
wherein each of the plurality of containers has a top wall, a bottom wall and at least one side wall connecting the top wall with the bottom wall.

13. The thermal energy storage device according to claim 12, **characterized in that** the bottom wall and/or the top wall of each container is not arranged in parallel to the substantially planar region of the bottom wall of the thermal energy storage device, wherein the bottom wall and/or the top wall of each container is preferably arranged in an angle in the range of 1° to <90°, preferably in the range of 10° to 80°, more preferably in the range of 20 ° to 70°, even more preferably in the range of 30° to 60°, particularly preferably in the range of 40° to 50°, especially 45°, to the substantially planar region of the bottom wall of the thermal energy storage device.

14. The thermal energy storage device according to one of claims 12 or 13, **characterized in that** the thermal energy storage device is a hot water tank and optionally contains water.

15. System, comprising
a) a first thermal energy storage device according to one of the claims 12 to 14;
b) a second thermal energy storage device according to one of the claims 12 to 14;
c) a heat pump; and
d) a controller;
wherein, preferably, the controller is configured to control the heat pump to charge the first thermal storage device and to control the second thermal storage device to provide domestic hot water and/or space heating,
wherein, more preferably, the first thermal energy storage device is connected to the second thermal energy storage device in a thermally conductive manner.
